# FASCICULE DE BREVET EUROPEEN

(11) **EP 0 930 442 B1**
(45) Date de publication et mention de la délivrance du brevet: **10.12.2003**
(21) Numéro de dépôt: 99400056.0
(22) Date de dépôt: 12.01.1999
(51) Int. Cl.: F16B 43/00, F16B 19/14

(54) **Embase de fixation de pièce**
Grundplatte zum Befestigen eines Elements
Base for fixing an element

(30) Priorité: 14.01.1998 FR 9800308
(43) Date de publication de la demande: 21.07.1999
(73) Titulaire: SOCIETE DE PROSPECTION ET D'INVENTIONS TECHNIQUES SPIT, 26501 Bourg-Les-Valence Cédex (FR)
(72) Inventeur: Nayrac, Frédéric, 26000 Valence (FR)
(74) Mandataire: Bloch, Gérard

(56) Documents cités:
- EP-A- 0 702 159
- DE-C- 4 327 436
- FR-A- 2 260 018
- US-A- 4 655 423
- US-A- 5 688 092

## Description

La présente invention concerne une embase de fixation de pièce.

On utilise souvent de telles embases dans le secteur du bâtiment afin de fixer des câbles, des tubes, des goulottes ou autres pièces de second oeuvre à des parois.

Une embase de fixation de câble, pour prendre cet exemple, comprend généralement des moyens de support de câble, des moyens pour maintenir le câble sur les moyens de support et des moyens de fixation de l'embase à la paroi.

L'invention vise plus particulièrement une embase dont les moyens de fixation à la paroi comprennent des moyens de réception d'un tampon, ou clou, de fixation, ce qui permet de fixer l'embase sans avoir au préalable à percer de trou dans la paroi, en l'y fixant directement par ancrage d'un clou à l'aide d'un appareil de scellement, ou cloueur.

Un clou de fixation comporte une tête et une tige sur laquelle est enfilée une jupe de guidage.

Certains cloueurs sont pourvus d'un guide-tampon à l'extrémité duquel on a ménagé un évidement intérieur annulaire, notamment pour le maintien des embases sur les cloueurs avant le tir, par leurs moyens de réception de tampon. Dans ce cas, un tir surpuissant, par rapport à la dureté de la paroi à laquelle l'embase doit être fixée, peut, après éclatement de la jupe du clou et franchissement de la jupe par la tête du clou, forcer la jupe éclatée dans l'évidement du guide-tampon et l'y coincer, avec le risque que le piston de l'appareil de scellement ne se coince à son tour dans le guide-tampon.

La présente invention vise à pallier cet inconvénient.

A cet effet, l'invention concerne une embase de fixation d'une pièce comprenant des moyens supports de pièce, des moyens de maintien de la pièce sur les moyens supports et des moyens de fixation de l'embase comprenant des moyens de réception d'un tampon de fixation, embase caractérisée par le fait que les moyens de réception de tampon comprennent une coupelle d'amortissement et de rembourrage disposée dans une cuvette de réception d'une jupe de guidage de clou et entourée d'un évidemment annulaire.

Grâce à l'invention, la jupe de guidage de clou peut venir se loger dans la coupelle et s'interposer entre la tête de clou et la paroi de la coupelle pour servir d'amortisseur et éventuellement de rembourrage entre la tête de clou et l'embase.

La coupelle étant avantageusement déformable, la tête et la jupe de guidage d'un clou peuvent venir se loger dans la coupelle, l'ouvrir davantage pour la plaquer contre la paroi interne du guide-tampon, mais avec toujours la jupe de guidage interposée entre la tête de clou et la paroi de la coupelle, éliminant tout risque de coincement de la jupe dans le guide-tampon.

L'invention concerne également une embase de fixation d'une pièce comprenant des moyens supports de pièce, des moyens de maintien de la pièce sur les moyens supports et des moyens de fixation de l'embase comprenant des moyens de réception d'un tampon de fixation, embase caractérisée par le fait que les moyens de réception de tampon comprennent une coupelle d'amortissement et de rembourrage de réception d'une jupe de guidage de clou et rehaussée d'un épaulement annulaire directement adjacent à la coupelle.

Dans ce cas , en position de fixation et de tir, la coupelle des moyens de réception de tampon et aussi de réception de la jupe de guidage se trouve à l'avant de l'extrémité du guide-tampon, ce qui élimine assurément tout risque d'obturation du guide-tampon par la jupe de guidage.

Par US 5 688 092, on connaît une embase de fixation d'un panneau d'isolation sur un support comportant une cavité destinée à recevoir la jupe de guidage d'un tampon. Mais avec cette embase, le tampon n'est pas guidé par le guide-tampon jusqu'à sa pénétration dans le support récepteur. On soulignera qu'aussi bien grâce à la cuvette et à l'évidemment annulaire entourant la coupelle que grâce à l'épaulement annulaire directement adjacent à la coupelle, la présente invention pallie cet inconvénient.

Par DE 43 27 436, on connaît une autre embase de fixation, mais elle est dépourvue de coupelle d'amortissement et de rembourrage. La cheminée de centrage ne peut servir que d'amortisseur.

Dans tous les cas, les moyens de réception de tampon peuvent comporter, dans la coupelle d'amortissement et de rembourrage, une cheminée de centrage de tampon.

L'invention sera mieux comprise à l'aide de la description suivante de plusieurs formes de réalisation de l'embase de fixation, en référence au dessin annexé, sur lequel :
- la figure 1 représente une vue en coupe de la première forme de réalisation de l'embase de fixation en position d'utilisation, après tir,
- la figure 2 représente une vue en coupe de la seule partie de fixation de l'embase de la figure 1,
- la figure 3 représente une vue en coupe de la partie d'embase de la figure 2, en position d'utilisation,
- la figure 4 représente une vue en coupe de la partie de fixation d'une deuxième forme de réalisation de l'embase de l'invention,
- la figure 5 représente une vue en coupe de la partie d'embase de la figure 4, en position d'utilisation et
- la figure 6 représente une vue en coupe de la partie de fixation d'une troisième forme de réalisation de l'embase de l'invention, en position d'utilisation.

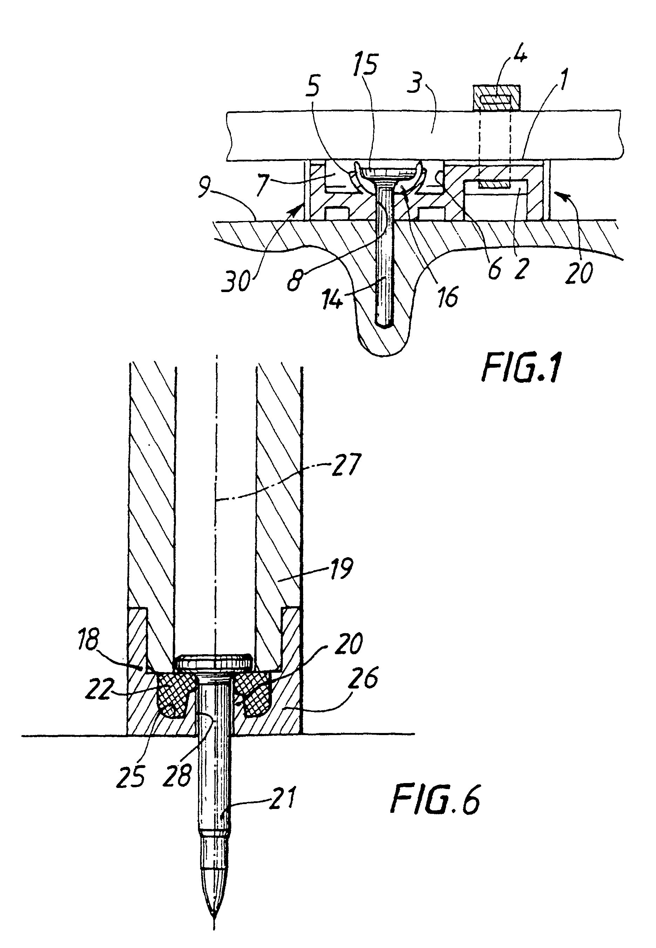

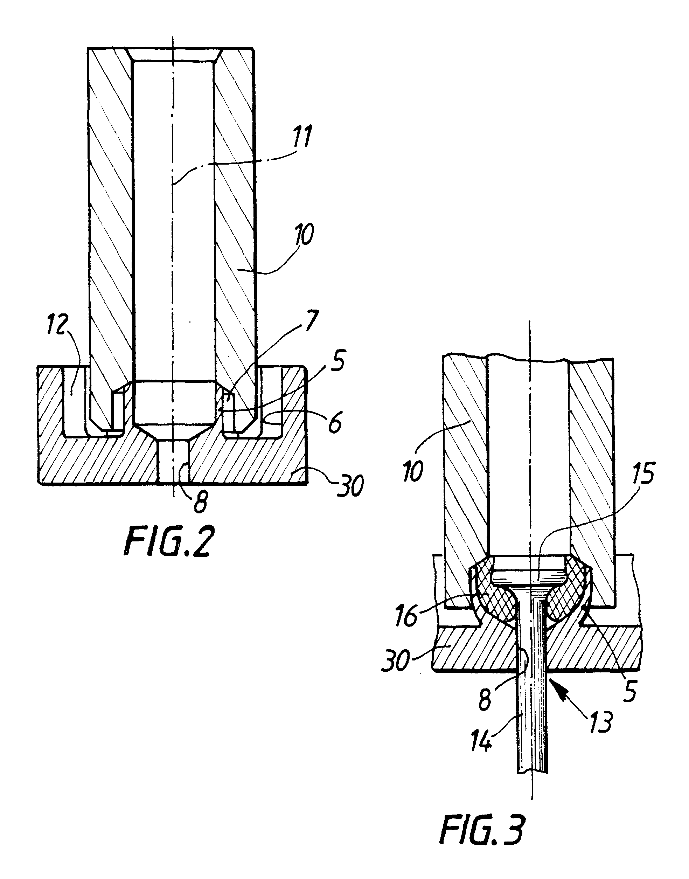

En référence aux figures 1 à 3, l'embase, de forme parallélépipédique, monobloc, présente ici un plan de symétrie et comprend deux parties adjacentes :
- une portion 20 de support et de maintien, ici d'un câble, et
- une portion 30 de réception de tampon.

La portion de support de câble 20 présente, dans sa partie centrale, une surface 1 perpendiculaire au plan de symétrie et rainurée parallèlement à ce plan, pour servir d'appui au câble.

Sous cette surface 1 est ménagée une lumière transversale 2 ici de section rectangulaire, s'étendant perpendiculairement au plan de symétrie. Un câble 3 est posé sur la surface 1 et y est maintenu par un collier 4 traversant la lumière 2 et enserrant le câble 3. La portion de réception du tampon 30 présente une coupelle 5 à paroi déformable, dans une cuvette 6, un évidement annulaire 7 étant ainsi ménagé entre la paroi de la cuvette 6 et la coupelle 5. Le fond de la portion d'embase 30 de réception de tampon est percé d'un trou traversant 8 d'axe 11. Des rainures radiales de maintien 12 sont prévues dans la cuvette 6.

Pour la fixation de l'embase à une paroi 9, l'extrémité d'un guide-tampon 10 d'un appareil de scellement est glissée dans la cuvette 6, entre la coupelle 5 et les rainures de maintien 12. Après tir, l'embase est fixée par un clou 13 pourvu d'une tête 15 et d'une tige 14 sur laquelle se trouvait, avant le tir, une jupe de guidage 16. On remarquera que le diamètre intérieur de la coupelle 5 est sensiblement égal au diamètre de l'alésage du guide-tampon 10.

Lors du tir, et la tige de clou 14 étant déjà engagée dans le trou 8, la jupe de guidage 16 et la tête de clou 15 sont venues se loger dans la coupelle 5 pour l'ouvrir davantage et la plaquer contre la paroi interne du guide-tampon 10, la jupe 16, après expansion, étant interposée entre la coupelle 5 et la tête de clou 15. La jupe 16 a joué un rôle d'amortisseur et, en cas de tir surpuissant, empêché le clou de traverser l'embase et, en position d'utilisation, la jupe 16 peut faire office de rembourrage entre la tête de clou 15 et le fond de la partie d'embase 30.

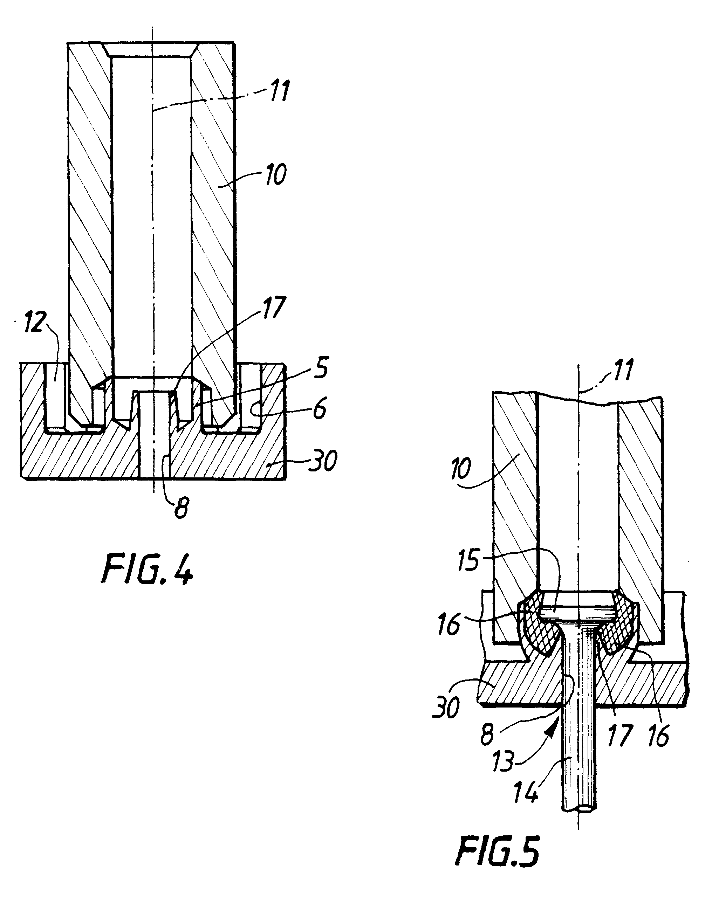

La forme de réalisation de l'embase des figures 4, 5 ne se distingue de celle des figures précédentes que par la présence, dans la partie centrale de la coupelle d'amortissement et de rembourrage 5, d'une cheminée 17 de centrage du tampon 13. C'est pourquoi, les mêmes éléments sont associés aux mêmes références. La cheminée 17 parfait le guidage du clou 13 en phase terminale du tir, en réalignant la tige 14 le long de l'axe 11.

Les deux formes de réalisation de l'embase, qui viennent d'être décrites, peuvent avoir des dimensions particulièrement réduites. Mais celles de la troisième forme de réalisation peuvent l'être davantage encore.

La coupelle 25 de la portion d'embase 26 de la figure 6 n'est plus entourée d'un évidement, elle est rigide et forme elle-même une cuvette. Par contre, elle est entourée et rehaussée d'un épaulement annulaire 18, directement adjacent à la cuvette 25, de réception de l'extrémité 19 d'un guide-tampon différent de l'autre. L'épaulement 18 est tourné vers l'intérieur, vers l'axe 27 de l'orifice 28 de passage du tampon 21. Dans la partie centrale de la coupelle 25 s'étend également une cheminée 20 de centrage du tampon 21, dont la jupe de guidage 22, après tir, est logée dans la coupelle 25, autour et au-dessous de la cheminée 20. Dans ce dernier exemple, la portion d'embase 26 est vraiment limitée au minimum utile au guide-tampon. En position de tir, la coupelle 25 se trouve à l'avant du guide-tampon 19.

On vient de décrire une embase pour la fixation d'un câble. L'embase de l'invention permet naturellement, la fixation d'un tube ou une goulotte.

## Revendications

1. Embase de fixation d'une pièce (3) comprenant des moyens (1) supports de pièces, des moyens (2, 4) de maintien de la pièce (3) sur les moyens supports (1) et des moyens (30) de fixation de l'embase comprenant des moyens de réception d'un tampon de fixation, embase **caractérisée par le fait que** les moyens de réception de tampon comprennent une coupelle d'amortissement et de rembourrage (5) disposée dans une cuvette (6) de réception d'une jupe (16) de guidage de clou (13) et entourée d'un évidemment annulaire (7).

2. Embase de fixation de câble selon la revendication 1, dans laquelle la coupelle (5) est déformable.

3. Embase de fixation d'une pièce (3) comprenant des moyens (1) supports de pièce, des moyens (2, 4) de maintien de la pièce (3) sur les moyens supports (1) et des moyens (26) de fixation de l'embase comprenant des moyens de réception d'un tampon de fixation, embase **caractérisée par le fait que** les moyens de réception de tampon comprennent une coupelle d'amortissement et de rembourrage (25) de réception d'une jupe (22) de guidage de clou (21) et rehaussée d'un épaulement annulaire (18) directement adjacent à la coupelle (25).

4. Embase de fixation de câble selon l'une des revendication 1 à 3, dans laquelle il est prévu, dans la coupelle d'amortissement et de rembourrage (5 ; 25), une cheminée (17 ; 20) de centrage de tampon.

## Patentansprüche

1. Grundplatte zum Befestigen eines Elements (3) mit Mitteln (1) zum Stützen von Elementen, Mitteln (2, 4) zum Halten des Elements (3) auf den Stützmitteln (1) sowie Mitteln (30) zum Befestigen der Grundplatte mit Mitteln zur Aufnahme eines Befestigungsdübels, **dadurch gekennzeichnet, dass** die Dübelaufnahmemittel eine Dämpfungs- und Polsterungsschale (5) umfassen, die in einer Aufnahmemulde (6) für eine Schürze (16) zur Führung eines Nagels (13) angeordnet und von einer ringförmigen Ausnehmung (7) umgeben ist.

2. Grundplatte zum Befestigen eines Kabels nach Anspruch 1, bei der die Schale (5) deformierbar ist.

3. Grundplatte zum Befestigen eines Elements (3) mit Mitteln (1) zum Stützen des Elements, Mitteln (2, 4) zum Halten des Elements (3) auf den Stützmitteln (1) sowie Mitteln (26) zum Befestigen der Grundplatte mit Mitteln zur Aufnahme eines Befestigungsdübels, **dadurch gekennzeichnet, dass** die Dübelaufnahmemittel eine Dämpfungs- und Polsterungsschale (25) zur Aufnahme einer Schürze (22) zur Führung eines Nagels (21) umfassen, wobei die Dämpfungs- und Polsterungsschale (25) eine Erhöhung in Form einer ringförmigen Schulter (18) aufweist, die direkt neben ihr liegt.

4. Grundplatte zum Befestigen eines Kabels nach einem der Ansprüche 1 bis 3, bei der in der Dämpfungsund Polsterungsschale (5; 25) ein Dübelzentrierungskanal (17; 20) vorgesehen ist.

## Claims

1. Base for fastening an element (3), comprising element-support means (1), means (2,4) for holding the element (3) on the support means (1) and means (30) for fastening the base comprising means for receiving a fastener, the base being **characterised in that** the fastener receiving means comprise a shock-absorbing and bolstering cup (5) disposed in a trough (6) for receiving a pin (13) guiding skirt (16) and surrounded by an annular recess (7).

2. Base for fastening a cable according to claim 1, wherein the cup (5) is deformable.

3. Base for fastening an element (3), comprising element-support means (1), means (2,4) for holding the element (3) on the support means (1) and means (30) for fastening the base comprising means for receiving a fastener, the base being **characterised in that** the fastener receiving means comprise a shock-absorbing and bolstering cup (25) for receiving a pin (21) guiding skirt (22) and raised by an annular shoulder (18) directly adjacent to the cup (25).

4. Base for fastening a cable according to one of claims 1 to 3, wherein a chimney (17;20) for centring a fastener is provided in the shock-absorbing and bolstering cup (5;25).
